(19) Europäisches Patentamt
European Patent Office
Office européen des brevets

(11) **EP 4 603 514 A1**

(12) **EUROPEAN PATENT APPLICATION**
published in accordance with Art. 153(4) EPC

(43) Date of publication:
**20.08.2025 Bulletin 2025/34**

(21) Application number: **24857460.0**

(22) Date of filing: **24.07.2024**

(51) International Patent Classification (IPC):
*C08F 2/06* (2006.01)          *C08F 2/01* (2006.01)
*C08F 236/10* (2006.01)          *C08F 212/08* (2006.01)

(86) International application number:
**PCT/KR2024/010688**

(87) International publication number:
**WO 2025/146891 (10.07.2025 Gazette 2025/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.01.2024 KR 20240000796**

(71) Applicant: **LG Chem, Ltd.
Seoul 07336 (KR)**

(72) Inventors:
• **OH, Suk Yung
Daejeon 34122 (KR)**

• **KO, Jun Seok
Daejeon 34122 (KR)**
• **KIM, Kwan Sik
Daejeon 34122 (KR)**
• **LEE, Sung Hyeon
Daejeon 34122 (KR)**
• **YOON, Su Ji
Daejeon 34122 (KR)**

(74) Representative: **Hoffmann Eitle
Patent- und Rechtsanwälte PartmbB
Arabellastraße 30
81925 München (DE)**

(54) **METHOD FOR PREPARING POLYMER**

(57)    The present invention provides a method for preparing a polymer, the method including: feeding a feed stream containing water and a polymer solution to a first stripper, feeding a first stripper lower discharge stream containing a polymer and water to a second stripper, feeding the second stripper lower discharge stream to a third stripper, and obtaining a polymer from the third stripper lower discharge stream.

【FIG. 1】

**Description**

[Technical Field]

CROSS-REFERENCE TO RELATED APPLICATION

The present application claims the benefit of priority to Korean Patent Application No. 10-2024-0000796, filed on January 3, 2024, the entire contents of which are incorporated herein by reference.

Technical Field

The present invention relates to a method for preparing a polymer, and more particularly, to a method for obtaining a polymer from a polymer solution using a small amount of steam.

[Background Art]

A solution polymerization method is a method of dissolving a monomer in a solvent and polymerizing the monomer in a solution state, and is used in radical polymerization and ionic polymerization. A representative example of preparing a polymer through the solution polymerization is preparation of a styrene-butadiene copolymer through an anionic polymerization reaction of styrene and butadiene. Usually, n-butyl lithium is used as an anionic polymerization initiator, and cyclohexane is used as a solvent.

Since a large amount of solvent is used in the process of preparing a polymer through the solution polymerization method, there is a need to perform a process of separating and recovering a solvent in a reaction product produced through a solution polymerization reaction to obtain a polymer. As such, a steam stripping process using a stripper was applied to obtain a high-purity polymer in the reaction product.

In general, in the steam stripping process, a large amount of steam is required, and thus, energy usage may increase. When the amount of steam fed to the steam stripping process is insufficient, the amount of solvent remaining in the polymer increases, which has an adverse effect on the product such as failure to solidify the polymer or an increase in total volatile organic compounds (tVOCs) of the polymer.

[Disclosure]

[Technical Problem]

In order to solve the problems mentioned in the background art, an object of the present invention is to provide an effect of obtaining a high-purity polymer while reducing the amount of steam in a process.

[Technical Solution]

In one general aspect, a method for preparing a polymer includes feeding a feed stream containing water and a polymer solution to a first stripper to obtain a first stripper upper discharge stream containing a solvent and a first stripper lower discharge stream containing a polymer and water; feeding the first stripper lower discharge stream to a second stripper to obtain a second stripper upper discharge stream and a second stripper lower discharge stream, feeding the second stripper upper discharge stream to the first stripper, and feeding the second stripper lower discharge stream to a third stripper; separating the second stripper lower discharge stream into a third stripper upper discharge stream and a third stripper lower discharge stream in the third stripper; feeding a third steam stream containing steam to an ejector, sucking the third stripper upper discharge stream by the ejector to obtain an ejector discharge stream containing the third steam stream and the third stripper upper discharge stream, and feeding a mixed stream obtained by mixing the ejector discharge stream with a second steam stream containing steam to the second stripper; and obtaining a polymer from the third stripper lower discharge stream.

[Advantageous Effects]

According to the method for preparing a polymer of the present invention, as gas generated in the third stripper is increased by the ejector provided above the third stripper, the efficiency of stripping for vaporizing the solvent remaining in the polymer in the third stripper may be increased even without feeding steam to the third stripper. In addition, the ejector discharge stream containing a motive fluid for operating the ejector and a suction fluid sucked by the ejector is fed to the second stripper, and the mixed stream obtained by mixing the ejector discharge stream with the second steam stream containing steam is fed to the second stripper, such that the polymer present in the liquid phase in the second stripper may be smoothly dispersed, and the mixing efficiency of the polymer and the steam may be increased, thereby effectively vaporizing the solvent remaining in the polymer.

Accordingly, the solvent evaporated by the steam contained in the mixed stream may be contained in the second stripper upper discharge stream together with the steam and may be fed to the first stripper, and the solvent may also be vaporized by the steam contained in the second stripper upper discharge stream in the first stripper. That is, since the steam contained in the mixed stream may be used as a heat source to heat the second stripper and the first stripper, the total amount of steam used in the process may be expected to be reduced.

[Description of Drawings]

FIG. 1 is a process diagram showing a steam stripping process in a method for preparing a polymer according to an embodiment of the present invention.

FIGS. 2 to 4 are process diagrams showing a steam stripping process in a method for preparing a polymer according to comparative examples of the present invention.

[Best Mode]

The terms and words used in the description and claims of the present invention are not to be construed limitedly as having general or dictionary meanings but are to be construed as having meanings and concepts meeting the technical idea of the present invention, based on a principle that the inventors are able to appropriately define the concepts of terms in order to describe their own inventions in the best mode.

The term "stream" in the present invention may refer to a flow of a fluid in a process, and may also refer to a fluid flowing through a pipe itself. Specifically, the stream may refer to both a fluid flowing through a pipe connecting the respective devices to each other itself and a flow of a fluid. In addition, the fluid may refer to a gas or a liquid, and a case of the fluid containing a solid component is not excluded.

In the present invention, in devices such as a stripper, a "lower portion" of the device refers to a point at a height of 80% to 100% from the uppermost portion of the device to a lower position, and specifically, may refer to the lowermost portion (the bottom of the column), unless otherwise specified. Similarly, an "upper portion" of the device refers to a point at a height of 0% to 20% from the uppermost portion of the device to the lower position, and specifically, may refer to the uppermost portion (the top of the column), unless otherwise specified.

In the present invention, in the devices such as the stripper, an operating temperature of the device may refer to a temperature of the lower portion of the device, unless otherwise specified. Similarly, an operating pressure of the device may refer to a pressure of the upper portion of the device, unless otherwise specified. Specifically, an operating temperature of the stripper may refer to a temperature in a region at a height of 0 to 20% from the uppermost portion of the stripper to a lower position, and a pressure of an upper portion of the stripper may refer to a pressure in a region at a height of 80 to 100% from the uppermost portion of the column to the lower position.

The term "crumbs" in the present invention is produced by feeding a polymer solution to a stripper and performing a steam stripping process, and may refer to a polymer in the form of droplets, from which a solvent is removed by volatilization.

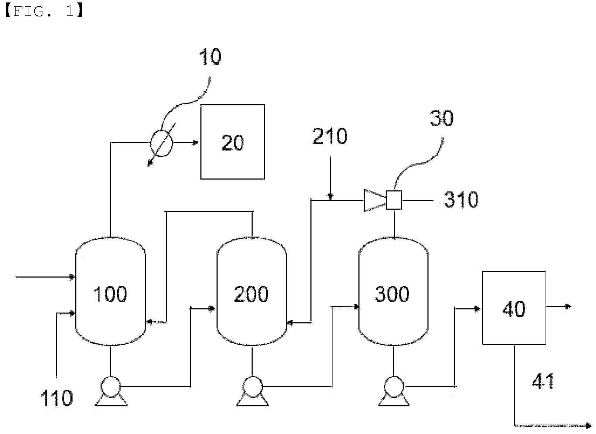

Hereinafter, the present invention will be described in more detail with reference to FIG. 1 in order to assist in the understanding of the present invention.

A method for preparing a polymer according to an embodiment of the present invention may include feeding a feed stream containing water and a polymer solution to a first stripper 100 to obtain a first stripper upper discharge stream containing a solvent and a first stripper lower discharge stream containing a polymer and water; feeding the first stripper lower discharge stream to a second stripper 200 to obtain a second stripper upper discharge stream and a second stripper lower discharge stream, feeding the second stripper upper discharge stream to the first stripper 100, and feeding the second stripper lower discharge stream to a third stripper 300; separating the second stripper lower discharge stream into a third stripper upper discharge stream and a third stripper lower discharge stream in the third stripper 300; feeding a third steam stream containing steam to an ejector, sucking the third stripper upper discharge stream by the ejector to obtain an ejector discharge stream containing the third steam stream and the third stripper upper discharge stream, and feeding a mixed stream obtained by mixing the ejector discharge stream with a second steam stream 210 containing steam to the second stripper; and obtaining a polymer from the third stripper lower discharge stream.

According to an embodiment of the present invention, the polymer solution may be derived from a reaction product produced by feeding a monomer stream and a solvent stream to a reactor and performing a polymerization reaction. Specifically, a reaction product may be obtained by subjecting monomers to a polymerization reaction in the presence of a solvent in the reactor. The reaction product may contain a polymer formed by the polymerization reaction of the monomers, unreacted monomers, and a solvent.

The monomers may include an aromatic vinyl-based monomer including at least one or more selected from the group consisting of styrene, alpha-methyl styrene, 3-methyl styrene, 4-methyl styrene, 4-propyl styrene, isopropenylnaphthalene, 1-vinylnaphthalene, styrene substituted with an alkyl group having 1 to 3 carbon atoms, 4-cyclohexylstyrene, 4-(p-methylphenyl)styrene, and styrene substituted with halogen; and a conjugated diene monomer including one or more selected from the group consisting of 1,3-butadiene, 1,4-butadiene, 2,3-dimethyl-1,3-butadiene, 2-ethyl-1,3-butadiene, 1,3-pentadiene, piperylene, 3-butyl-1,3-octadiene, 2-phenyl-1,3-butadiene, and isoprene. As a specific example, the monomers may include styrene and butadiene, and accordingly, the polymer produced by the polymerization reaction may be a styrene-butadiene copolymer.

The solvent may include a hydrocarbon-based solvent, and specifically, may include one or more selected from the group consisting of cyclohexane, normal hexane, N,N-dimethylformamide, N,N-dimethylacetamide, N-methyl-2-pyrrolidone, N-cyclohexyl-2-pyrrolidone, 1,3-dialkyl-2-imidazolidinone, tetramethyl urea, and hexamethylphosphoric acid triamide. As a specific example, the solvent may include cyclohexane. In this case, polymerization of a styrene-butadiene copolymer may be effectively performed.

The polymerization reaction may be performed by further adding additives such as ion-exchange water, an initiator, a molecular weight regulator, an activator, and a redox catalyst.

The initiator may include, for example, one or more selected from the group consisting of n-butyl lithium, diisopropylbenzene hydroperoxide, t-butyl hydroperoxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanol peroxide, and t-butyl peroxy isobutyrate.

The reaction product obtained by the solution polymerization reaction that polymerizes the monomers using the solvent may be transferred to, for example, a blow down tank, such that the solvent contained in the reaction product may be volatilized using residual heat of the solution polymerization reaction. Through this, a polymer solution having a higher polymer composition compared to the reaction product may be obtained.

As such, even when the solvent contained in the reaction product is volatilized in the blow down tank, a part of the solvent is not volatilized and remains in the polymer. Therefore, the present invention provides a method capable of effectively separating the solvent contained in the polymer solution to obtain a high-purity polymer while reducing the amount of energy used in such a process.

Specifically, there are several methods for separating the solvent from the polymer solution, and in the present invention, a steam stripping process of removing the solvent contained in the polymer solution by volatilization and solidifying the polymer contained in the polymer solution to obtain the polymer as crumbs may be applied. The steam stripping process may be performed by a multi-stage stripper.

The method for preparing a polymer according to an embodiment of the present invention may include feeding a feed stream containing water and a polymer solution to the first stripper 100 to obtain a first stripper upper discharge stream containing a solvent and a first stripper lower discharge stream containing a polymer and water.

Specifically, the feed stream containing a polymer solution and water, which is obtained by mixing the polymer solution with water, may be fed to the first stripper 100. As another example, the polymer solution and water may be fed to the first stripper 100 through separate pipes, respectively. The water may be high-temperature water, and specifically, may be at 90 to 110°C.

The polymer solution contained in the feed stream 1 may be heated by steam introduced into the first stripper 100. Here, the steam introduced into the first stripper 100 may be introduced from a first steam stream 110 and/or a second stripper upper discharge stream described below. As such, when the polymer solution is heated, the solvent contained in the polymer solution may be evaporated, and the polymer may be solidified. In this case, solidification of the polymer may be performed by the antisolvent precipitation mechanism and solvent evaporation. Specifically, the amount of solvent remaining in the polymer decreases due to evaporation of the solvent and the polymer is precipitated in water, which is an antisolvent for the polymer, and therefore, solidification of the polymer may be performed.

The high-temperature water fed to the first stripper 100 may also heat the polymer solution like steam. Furthermore, the water may serve as an antisolvent and may also serve as a dispersion medium that disperses the polymer in a liquid phase as much as possible. Therefore, the polymer contained in the polymer solution may be solidified by the steam and water, and the solvent and unreacted monomers contained in the polymer solution may be evaporated and discharged from an upper portion of the first stripper 100.

According to an embodiment of the present invention, the first steam stream 110 containing steam may be fed to the first stripper 100 through a line connected to the first stripper 100. Specifically, the first steam stream 110 may be introduced into the first stripper 100 through a line connected to a lower portion of the first stripper 100. More specifically, the first steam stream 110 may be fed as a heat source for heating the first stripper 100, and through this, a temperature of the first stripper 100 may be finely controlled to a desired level. Furthermore, as the operating temperature of the first stripper 100 is controlled as described above, the stripping efficiency of the process may be maximized, such that a content of total volatile organic compounds (tVOCs) in the final product may be reduced. Here, the total volatile organic compounds may collectively refer to liquid or vapor phase organic compounds that are easily evaporated into the air when the final product is heated, and may include, for example, a solvent.

Specifically, a temperature of the first steam stream 110 may be 120 to 280°C, and a pressure of the first steam stream 110 may be 2 to 100 bar. When the temperature and pressure of the first steam stream 110 are within the above ranges, the efficiency of stripping performed in the first stripper 100 may be maximized.

According to an embodiment of the present invention, the operating temperature of the first stripper 100 may be higher than a glass transition temperature (Tg) of the polymer by 5°C or more and may be higher than an azeotropic point of the solvent and water by 10°C or more. Specifically, when the operating temperature of the first stripper 100 is higher than the glass transition temperature of the polymer by 5°C or more, an amorphous portion of the polymer may easily move. Therefore, the solvent remaining in the polymer may diffuse in the liquid phase, which makes it easy to vaporize the solvent. When the operating temperature of the first stripper 100 is higher than the azeotropic point of the solvent and water by 10°C or more, it may be an appropriate temperature level to sufficiently volatilize the solvent present in the polymer solution. Here, the azeotropic point of the solvent and water may refer to a boiling point of an azeotropic mixture containing water and a solvent.

According to the present invention, the operating temperature of the first stripper 100 may be 85 to 95°C, and specifically, 85 to 90°C. When the operating temperature of the first stripper 100 is lower than 80°C, the efficiency of stripping for vaporizing the solvent remaining in the polymer and separating the polymer and the solvent may be rapidly decreased in the first stripper 100, and polymer agglomerates called mats may be formed on water, and thus, the operation of the steam stripping process may not be performed. When the operating temperature of the first stripper 100 exceeds 95°C, the amount of heat to be fed to the first stripper 100 may increase excessively, which may be not preferable in terms of energy.

By heating performed by steam and high-temperature water in the first stripper 100, a vapor phase first stripper upper discharge stream containing a solvent and a liquid phase first stripper lower discharge stream containing a polymer and water may be obtained. Specifically, the first stripper lower discharge stream may contain a solidified polymer, and the solidified polymer may be transferred by water. The first stripper upper discharge stream may further contain steam (water vapor) and unreacted monomers.

The first stripper upper discharge stream may be cooled through a condenser 10 and then introduced into a purification process 20. In the purification process 20, the solvent and the unreacted monomers contained in the cooled first stripper upper discharge stream may be separated and recovered, respectively. The solvent and unreacted monomers recovered in the purification process 20 may be reused as raw materials for the polymerization reaction described above.

The method for preparing a polymer according to an embodiment of the present invention may include feeding the first stripper lower discharge stream to the second stripper 200 to obtain a second stripper upper discharge stream and a second stripper lower discharge stream, feeding the second stripper upper discharge stream to the first stripper 100, and feeding the second stripper lower discharge stream to the third stripper 300.

Specifically, the first stripper lower discharge stream containing a polymer and water may be fed to the second stripper 200 and heated by steam. In this case, the steam used in the second stripper 200 may be introduced from a mixed stream described below.

The solvent and unreacted monomers that are not volatilized in the first stripper 100 may be contained in the first stripper lower discharge stream. Therefore, the solvent and unreacted monomers contained in the first stripper lower discharge stream may be additionally evaporated by steam in the second stripper 200 and separated to an upper portion of the second stripper 200. Through this, a vapor phase second stripper upper discharge stream containing the volatilized solvent and unreacted monomers and a liquid phase second stripper lower discharge stream containing a polymer and water may be obtained in the second stripper 200.

Specifically, a content of the polymer in the second stripper lower discharge stream may be higher than a content of the polymer in the first stripper lower discharge stream. That is, the second stripper lower discharge stream may be fed to the third stripper 300 as a stream having a higher content of the polymer by removing the unreacted monomers and the solvent as much as possible.

The second stripper upper discharge stream may be fed to the first stripper 100 and may further contain steam in addition to the solvent and the unreacted monomers. As described above, the steam contained in the second stripper upper discharge stream may be used as a heat source to heat the first stripper 100.

According to an embodiment of the present invention, the first stripper 100 and the second stripper 200 may be operated while satisfying the following Expressions 1 and 2.

$$[\text{Expression 1}]$$

$$P2 - P1 \geq 0.2 \text{ bar}$$

$$[\text{Expression 2}]$$

$$1.8 \text{ bar} \geq P1 \geq 1.1 \text{ bar}$$

In Expressions 1 and 2, P1 is an operating pressure of the first stripper 100, and P2 is an operating pressure of the second stripper 200. Specifically, the second stripper 200 may be operated at an operating pressure that is 0.2 bar or more, 0.2 bar to 0.8 bar, or 0.2 bar to 0.5 bar higher than the operating pressure of the first stripper 100. The first stripper 100 and the second stripper 200 are operated while satisfying Expression 1, such that the second stripper upper discharge stream may be fed to the first stripper 100 without a separate compressor.

Specifically, when Expression 1 is satisfied, the second stripper upper discharge stream may be sufficiently fed to the first stripper 100 due to a difference in operating pressure between the first stripper 100 and the second stripper 200. Therefore, there may be no need to provide a separate device such as an ejector to the second stripper 200 to feed the second stripper upper discharge stream to the first stripper 100. As an ejector is not provided above the second stripper 200, it is possible to prevent additional use of steam fed to operate the ejector, which may also be preferable in terms of economic feasibility such as device costs and process facility costs for the ejector.

That is, according to the present invention, the second stripper 200 is operated at an operating pressure that is 0.2 bar or more higher than the operating pressure of the first stripper 100, such that the second stripper upper discharge stream may be fed to the first stripper 100 without a separate device and additional use of energy for the separate device. Control of conditions for the operating pressure according to Expression 1 may be affected by the operating temperatures of the first stripper 100 and the second stripper 200.

The operating temperature of the first stripper 100 may be 1.1 to 1.8 bar, and specifically, 1.1 to 1.5. Specifically, when the operating pressure of the first stripper 100 is less than 1.1 bar, the stripping efficiency may be decreased due to a low operating pressure of the first stripper 100. In this case, in order to increase the stripping efficiency of the first stripper 100, the amount of steam fed to the first stripper 100 may increase; however, entrainment may occur due to an excessive volume flow rate of gas in the first stripper upper discharge stream, which may cause fouling in the condenser 10. When the operating pressure of the first stripper 100 exceeds 1.8 bar, the energy usage may increase to satisfy these operating conditions, and the operating temperature of the first stripper 100 may also increase excessively due to a high temperature, resulting in the occurrence of problems such as local polymer chain scission.

The method for preparing a polymer according to an embodiment of the present invention may include separating the second stripper lower discharge stream into a third stripper upper discharge stream and a third stripper lower discharge stream in the third stripper 300.

As described above, the second stripper lower discharge stream may contain water and a solidified polymer, and may further contain a solvent remaining in the solidified polymer. Therefore, in the third stripper 300, the second stripper lower discharge stream may be heated to cause gas-liquid separation into a vapor phase third stripper upper discharge stream containing unreacted monomers and a solvent and a liquid phase third stripper lower discharge stream containing water and a polymer.

Specifically, heating of the second stripper lower discharge stream in the third stripper 300 may be performed by a difference in pressure between the second stripper 200 and the third stripper 300. More specifically, since the operating pressure of the second stripper 200 is higher than the operating pressure of the third stripper 300, as the second stripper lower discharge stream is fed to the third stripper 300, heating of the second stripper lower discharge stream may be performed in the third stripper 300 using residual heat resulting from the pressure drop.

The third stripper 300 may serve to uniformly transfer the third stripper lower discharge stream containing the solidified polymer to a dehydration process 40 subsequent to the third stripper 300. To this end, it may be preferable that steam is not fed to the third stripper 300. For example, when steam is fed to the third stripper 300, the mixing efficiency of the third stripper 300 is decreased by the steam, such that the polymer present on water may be transferred in a state of being not uniformly mixed with water and contained in the third stripper lower discharge stream. In this case, due to the non-uniform mixing of the water and the polymer contained in the third stripper lower discharge stream, a hunting problem may occur in the dehydration process 40 and the quality of the final product may be deteriorated. Therefore, it may be preferable that the second stripper lower discharge stream is separated into the third stripper upper discharge stream and the third stripper lower discharge stream in the third stripper 300 using residual heat generated due to a difference in pressure between the second stripper and the third stripper without introduction of steam.

According to an embodiment of the present invention, no steam is introduced into the third stripper 300, and a temperature and a pressure of the steam may be 120 to 280°C and 2 to 100 bar, respectively. Specifically, the steam is a vapor phase and may be distinguished from the water contained in the third stripper lower discharge stream according to a state of matter. The water contained in the third stripper lower discharge stream is a liquid phase, and a temperature thereof may be 90 to 110°C.

An operating pressure of the third stripper 300 may be 0.9 to 1.0 bar. Specifically, when the operating pressure of the third stripper 300 is less than 0.9 bar, due to the vacuum atmosphere in the third stripper 300, intermittent inflow of outside air (oxygen) may occur, which may cause discoloration of the polymer. When the operating pressure of the third stripper 300 exceeds 1.0 bar, the third stripper lower discharge stream is introduced into the dehydration process 40 at a high temperature and a high pressure, and thus, heat loss due to superheated steam may occur in the dehydration process 40. Specifically, the dehydration process 40 may be performed under pressure conditions similar to those of the operating pressure of the third stripper 300 (approximately 0.9 to 1.0 bar), and when the third stripper lower discharge stream at a high pressure and a high temperature is introduced into the dehydration process 40, residual heat is generated due to the difference in pressure, and superheated steam is generated due to the residual heat, which may cause heat loss.

The method for preparing a polymer according to an embodiment of the present invention may include feeding a third steam stream containing steam to the ejector, sucking the third stripper upper discharge stream by the ejector to obtain an ejector discharge stream containing the third steam stream and the third stripper upper discharge stream, and feeding a mixed stream obtained by mixing the ejector discharge stream with a second steam stream 210 containing steam to the second stripper 200.

Specifically, the ejector 30 is a device that sucks and moves a suction fluid by using pressure energy of a high-pressure motive fluid, and may be provided above the third stripper 300. As such, the ejector 30 is provided above the third stripper 300, such that the gas volatilized to the upper portion of the third stripper 300 may be contained in the third stripper upper discharge stream and sucked into the ejector 30. More specifically, since the gas generated in the third stripper 300 may be increased by the ejector 30, the stripping efficiency of the third stripper 300 may be increased without newly feeding steam to the third stripper 300.

The third steam stream 310 may be used as a motive fluid to operate the ejector 30. In addition, the third steam stream 310, which is a motive fluid, and the third stripper upper discharge stream, which is a suction fluid, are mixed in the ejector 30, such that the third stripper upper discharge stream may be heated by the third steam stream 310, and it is possible to secure flowability up to the second stripper 200 or the first stripper 100. A flow rate of the third steam stream 310 may be controlled to maintain the operating pressure of the third stripper 300 at 0.9 to 1.0 bar.

In other words, the third steam stream 310 is fed to the ejector 30, and the ejector 30 sucks the third stripper upper stream, such that an ejector discharge stream containing the third stripper upper discharge stream and the third steam stream 310 may be obtained.

Thereafter, a mixed stream may be obtained by mixing the ejector discharge stream with the second steam stream 210 containing steam, and the mixed stream may be fed to the second stripper 200. As the ejector discharge stream is mixed with the second steam stream 210, the steam contained in the ejector discharge stream and the steam contained in the second steam stream 210 are mixed together and introduced into the second stripper 200, such that dispersion of the polymer present in the liquid phase in the second stripper 200 may be smoothly performed. Through this, the mixing efficiency between the polymer and steam is maximized, such that the solvent remaining in the polymer may be more effectively vaporized. Therefore, the effect of solvent volatilization, that is, stripping, which is performed in the second stripper 200, may be maximized.

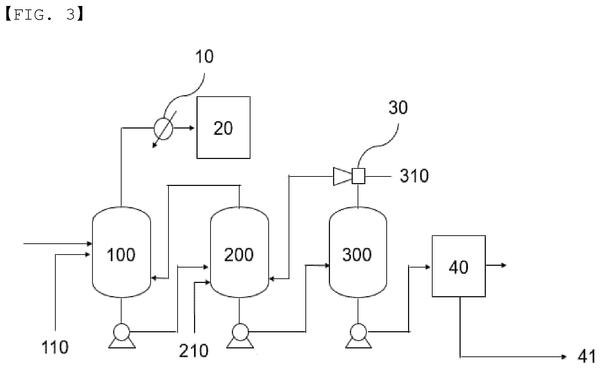

Referring to FIG. 3, in the related art, the second steam stream 210 containing steam was not mixed with the ejector discharge stream, and the second steam stream 210 was fed to the second stripper 200 through a separate line connected to the lower portion of the second stripper 200. In this case, the second stripper 200 had to be provided with separate devices such as a nozzle and a distributor, which was not preferable from the viewpoint of economic feasibility such as process facility costs and device costs. In addition, when the second steam stream 210 and the ejector discharge stream are fed to the lower portion of the second stripper 200 through separate lines, respectively, the second steam stream 210 and the ejector discharge stream may be mixed in the liquid phase in the second stripper 200. In this case, high-temperature heat sources were introduced into two portions of the second stripper 200, an imbalance (maldistribution) in material transfer and heat transfer occurred, and the temperature of the polymer in the second stripper 200 was uneven, causing unevenness in the quality of the final product.

Accordingly, according to the present invention, the second steam stream 210 is mixed with the ejector discharge stream in the vapor phase, such that a mixed stream obtained by mixing the second steam stream 210 with the ejector discharge stream may be formed as a uniform heat source through rapid heat transfer and material transfer, and the mixed stream may be fed to the second stripper 200, thereby improving the thermal mixing efficiency and stripping efficiency of the second stripper 200.

The solvent evaporated by the steam contained in the mixed stream may be contained in the second stripper upper discharge stream together with the steam and may be fed to the first stripper 100, and the solvent may also be vaporized in the first stripper 100 by the steam contained in the second stripper upper discharge stream. That is, since the steam contained in the mixed stream may be used as a heat source to vaporize the solvent in the second stripper 200 and the first stripper 100, the total amount of steam used in the process may be expected to be reduced.

In general, the ejector 30 described above is a device with fixed operating conditions, and the flow rate of the third steam stream 310, which is a motive fluid of the ejector 30, may be fed to the ejector 30 at a constant rate without fluctuation. Due to this, when controlling the amount of steam fed to the first stripper 100 and the second stripper 200 according to the process situation, it may be difficult to control the amount of steam by the third steam stream 310. Therefore, the steam is supplemented with the second steam stream 210, such that it is possible to flexibly deal with the steam feeding in the process, thereby preventing a decrease in the stripping efficiency of the process due to process control hunting.

A temperature of the second steam stream 210 may be 120 to 280°C, and a pressure of the second steam stream 210 may be 2 to 100 bar. A temperature of the third steam stream 310 may be 140 to 280°C, and a pressure of the third steam stream 310 may be 4 to 100 bar. Specifically, it may be preferable that the pressure of the third steam stream 310 is higher than the pressure of each of the second steam stream 210 and the first steam stream 110. Through this, the third steam stream 310 may increase the suction efficiency of the ejector 30 as a high-pressure motive fluid.

According to an embodiment of the present invention, a mass flow rate of the second steam stream 210 may be 0.15 to 0.40 or 0.29 to 0.33 with respect to the total mass flow rate of the first steam stream 110, the second steam stream 210, and the third steam stream 310. Here, since the third steam stream 310 serves as a motive fluid for the ejector 30 as described above, it may be required to secure a certain level or higher of the flow rate of the third steam stream 310 in order to operate the ejector 30.

Specifically, when the mass flow rate of the second steam stream 210 is 0.40 or less with respect to the total mass flow rate of the first to third steam streams, the design and manufacturing of the ejector 30 may be facilitated when providing the ejector 30 above the second stripper 200. In addition, since the mass flow rate of the second steam stream 210 is not excessively high, it is possible to prevent deterioration of the performance of the ejector 30 for feeding the third stripper upper discharge stream to the second stripper 200. In a case where the mass flow rate of the second steam stream 210 is 0.15 or more with respect to the total mass flow rate of the first to third steam streams, when the yield of the product in the process changes, the temperature of each of the second stripper 200 and the first stripper 100 may be easily controlled by the second steam stream 210.

The method for preparing a polymer according to an embodiment of the present invention may include obtaining a polymer from the third stripper lower discharge stream.

Specifically, in the method for preparing a polymer according to the present invention, the obtaining of the polymer from the third stripper lower discharge stream may include feeding the third stripper lower discharge stream to a dehydration process and dehydrating the third stripper lower discharge stream to obtain a polymer.

More specifically, the third stripper lower discharge stream may have minimized contents of the solvent and the unreacted monomers by the steam stripping process performed in the first stripper 100 to the third stripper 300. In addition, a content of the polymer in the third stripper lower discharge stream may be higher than a content of the polymer in the second stripper lower discharge stream.

The third stripper lower discharge stream may be introduced into the dehydration process 40, and the dehydration process 40 may be a process of obtaining a high-purity polymer by solid-liquid separation of liquid water and a solid polymer contained in the third stripper lower discharge stream. Specifically, in the present invention, the dehydration process 40 may be performed in an open system, and may dehydrate the third stripper lower discharge stream by a filtration method.

According to the present invention, the water contained in the feed stream 1 may be derived from the water separated from the polymer by dehydrating the third stripper lower discharge stream in the dehydration process 40. When the third stripper lower discharge stream is dehydrated in the dehydration process 40, a large amount of water may be separated from the polymer. In this case, the water may be high-temperature water at approximately 100°C, and the high-temperature water is circulated to the first stripper 100 and reused, such that the amount of steam used as a heat source in the steam stripping process may be reduced. That is, the water separated from the polymer in the dehydration process 40 may be mixed with the polymer solution and may be contained in the feed stream 1.

A mass flow rate of the water contained in the feed stream 1 may be 11 to 15 times, and specifically, 11 to 13 times the mass flow rate of the polymer contained in the feed stream 1. Here, the water contained in the feed stream 1 may include the water separated from the polymer in the dehydration process 40.

Specifically, when the mass flow rate of the water contained in the feed stream 1 is less than 11 times the mass flow rate of the polymer contained in the feed stream 1, due to a small amount of water, the polymer cannot be dispersed in the liquid phase and may agglomerate as polymer agglomerates, making it difficult to operate the steam stripping process. When the mass flow rate of the water contained in the feed stream 1 is more than 15 times the mass flow rate of the polymer contained in the feed stream 1, as the mass flow rate of the water contained in the feed stream 1 increases excessively, the residual heat generated in the third stripper 300 may excessively increase due to the difference in pressure between the second stripper 200 and the third stripper 300. Accordingly, it may be difficult for the ejector 30 provided above the third stripper 300 to suck the excessive residual heat in the form of steam, which may cause a problem in that the operating pressure of the third stripper 300 increases. In addition, the size of the device for circulating the water separated from the polymer in the dehydration process 40 to the first stripper 100 needs to be increased, which may not be preferable in terms of economic feasibility such as process facility costs and device costs.

Hereinafter, the present invention will be described in more detail with reference to examples. However, the following examples are provided for illustrating the present invention. It is apparent to those skilled in the art that various modifications and alterations may be made without departing from the scope and spirit of the present invention, and the scope of the present invention is not limited thereto.

**Examples**

Example 1

A polymer preparation process was performed according to a process flow illustrated in FIG. 1.

Specifically, a polymerization reaction was performed in a reactor using styrene and butadiene as monomers and cyclohexane as a solvent to produce a reaction product. Thereafter, the reaction product was heated in a blow down tank to obtain the reaction product in which the solvent was partially evaporated as a polymer solution. A styrene-butadiene copolymer, which is a polymer, cyclohexane, and unreacted monomers were contained in the polymer solution.

A feed stream containing the polymer solution and water was fed to a first stripper 100. Specifically, a styrene-butadiene copolymer (flow rate: 10 ton/hr), cyclohexane (flow rate: 35 ton/hr), unreacted monomers (flow rate: 0.01 ton/hr), and water (temperature: 100°C, flow rate: 120 ton/hr) were contained in the feed stream. In the first stripper 100, the feed stream was heated using steam, and a first stripper upper discharge stream containing steam and a solvent and a first stripper lower discharge stream containing a polymer and water were obtained. At this time, an operating temperature of the first stripper 100 was 85°C, and an operating pressure of the first stripper 100 was 1.2 bar.

The first stripper upper discharge stream was cooled through a condenser 10 and then introduced into a purification process 20. The first stripper lower discharge stream was fed to a second stripper 200.

In the second stripper 200, the first stripper lower discharge stream was heated using steam, and a second stripper upper discharge stream containing steam and a solvent and a second stripper lower discharge stream containing a polymer and water were obtained. At this time, an operating temperature of the second stripper 200 was 112°C, and an operating pressure of the second stripper 200 was 1.5 bar.

The second stripper upper discharge stream was fed to the first stripper 100, and the second stripper lower discharge stream was fed to a third stripper 300.

In the third stripper 300, the second stripper lower discharge stream was heated, and a third stripper upper discharge stream containing a solvent and a third stripper lower discharge stream containing a polymer and water were obtained. At this time, an operating pressure of the third stripper 300 was 1 bar.

A third steam stream 310 containing steam (flow rate: 8 ton/hr, temperature: 220°C, pressure: 13 bar) and the third stripper upper discharge stream were fed to an ejector 30 to obtain an ejector discharge stream. A mixed stream obtained by mixing the ejector discharge stream with a second steam stream 210 containing steam (flow rate: 4 ton/hr, temperature: 200°C, pressure: 11 bar) was fed to the second stripper 200.

The third stripper lower discharge stream was fed to a dehydration process 40 and dehydrated to separate the water contained in the third stripper upper discharge stream from the polymer. Through this, the water separated from the polymer was circulated as a circulation stream 41 to the first stripper 100, and specifically, was contained in the feed stream 1. The polymer dehydrated in the dehydration process 40 was obtained as a final product, which is a high-purity polymer.

As a result, in Example 1, a total of 12 ton/hr of steam was used, the content of tVOCs in the final product was 10 ppm based on a total of 1 part by weight of the final product, and the variation in the content of tVOCs in the final product for a month (the difference between the highest and lowest contents of tVOCs in the final product measured for a month) was approximately 0.1% based on 10 ppm. Here, the content of tVOCs in the final product may refer to the contents of solvent and unreacted monomers contained in the finally obtained polymer, and it may be appreciated that as the content of tVOCs in the final product is lower, the stripping is effectively performed in the process.

Example 2

In Example 2, a polymer was prepared by the same process flow as that of Example 1, except that the flow rate of the second steam stream was controlled to 3.7 ton/hr, the first steam stream 110 was fed through a line connected to the first stripper, the flow rate of the first steam stream was controlled to 0.3 ton/hr, the temperature of the first steam stream was controlled to 200°C, and the pressure of the first steam stream was controlled to 11 bar.

As a result, in Example 2, a total of 12 ton/hr of steam was used, the content of tVOCs in the final product was 10 ppm based on a total of 1 part by weight of the final product, and the variation in the content of tVOCs in the final product for a month was approximately 0.01% based on 10 ppm.

In Example 2, it was confirmed that, as the first steam stream was additionally fed to the first stripper unlike Example 1, the temperature of the first stripper was most easily controlled, and thus, the variation in the content of tVOCs in the final product for a month was the lowest.

Example 3

In Example 3, a polymer was prepared by the same process flow as that of Example 2, except that the operating pressure of the first stripper was controlled to 1.0 bar and the flow rate of the third steam stream was controlled to 9 ton/hr.

As a result, in Example 3, as the flow rate of the third steam stream increased compared to Example 2 to maintain the operating temperature of the first stripper at 85°C, fouling occurred in the condenser due to entrainment caused by the excessive volume flow rate of gas in the first stripper upper discharge stream, and thus, the process was not operated for a long period of time.

Example 4

In Example 4, a polymer was prepared by the same process flow as that of Example 2, except that the operating pressure of the first stripper was controlled to 1.9 bar and the operating temperature of the first stripper was set to 96°C.

As a result, in Example 4, the first stripper was operated at a high temperature, and thus, the problems related to the product quality such as local polymer chain scission and polymer discoloration occurred.

Example 5

In Example 5, a polymer was prepared by the same process flow as that of Example 2, except that the flow rate of the third steam stream was controlled to 7 ton/hr and the operating temperature of the first stripper was controlled to 82°C.

As a result, in Example 5, the stripping efficiency of the first stripper was rapidly decreased, and the steam stripping process was not operated due to occurrence of polymer agglomerates.

Specifically, the reason why these problems occurred is that the operating temperature of the first stripper should be higher than the glass transition temperature (78°C) of the polymer by 5°C or more so that the solvent in the first stripper may actively diffuse and an appropriate condition for vaporizing the solvent may be created. In addition, this is because the operating temperature of the first stripper should be higher than the azeotropic point (73°C) of the solvent (cyclohexane) and water by 10°C or more to achieve a temperature level that may sufficiently vaporize the solvent.

**Comparative Examples**

Comparative Example 1

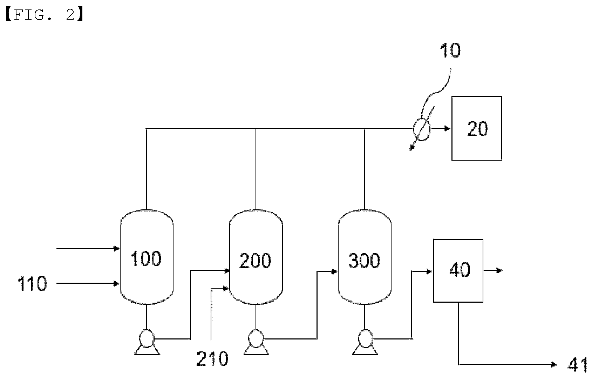

A polymer preparation process was performed according to a process flow illustrated in FIG. 2.

Specifically, a polymer solution was obtained using the same method as that of Example 1. A feed stream containing the polymer solution and water was fed to a first stripper 100. Specifically, a styrene-butadiene copolymer (flow rate: 10 ton/hr), cyclohexane (flow rate: 35 ton/hr), and water (temperature: 100°C, flow rate: 120 ton/hr) were contained in the feed stream.

A first steam stream 110 containing steam (10 ton/hr) was fed to the first stripper 100 through a line connected to the first stripper 100. In the first stripper 100, the feed stream was heated using steam, and a first stripper upper discharge stream containing steam and a solvent and a first stripper lower discharge stream containing a polymer and water were obtained. At this time, an operating temperature of the first stripper 100 was 92°C, and an operating pressure of the first stripper 100 was 1.2 bar. The first stripper lower discharge stream was fed to a second stripper 200.

A second steam stream 210 containing steam (10 ton/hr) was fed to the second stripper 200 through a line connected to the second stripper 200. In the second stripper 200, the first stripper lower discharge stream was heated using steam, and a second stripper upper discharge stream containing steam and a solvent and a second stripper lower discharge stream containing a polymer and water were obtained. At this time, an operating temperature of the second stripper 200 was 112°C, and an operating pressure of the second stripper 200 was 1.5 bar. The second stripper lower discharge stream was fed to a third stripper 300.

In the third stripper 300, the second stripper lower discharge stream was heated, and a third stripper upper discharge stream containing a solvent and a third stripper lower discharge stream containing a polymer and water were obtained. At this time, an operating pressure of the third stripper 300 was 1 bar.

The third stripper upper discharge stream was mixed with the first stripper upper discharge stream and the second stripper upper discharge stream described above and cooled as a mixed stream through a condenser 10, and then the cooled mixed stream was introduced into a purification process 20.

The third stripper lower discharge stream was fed to a dehydration process 40 and dehydrated to separate the water contained in the third stripper upper discharge stream from the polymer. Through this, the water separated from the polymer was circulated as a circulation stream 41 to the first stripper 100, and specifically, was contained in the feed stream 1. The polymer dehydrated in the dehydration process 40 was obtained as a final product, which is a high-purity polymer.

As a result, in Comparative Example 1, a total of 20 ton/hr of steam was used, the content of tVOCs in the final product was 10 ppm based on a total of 1 part by weight of the final product, and the variation in the content of tVOCs in the final product for a month was approximately 3% based on 10 ppm.

In Comparative Example 1, it was confirmed that the total amount of steam used increased compared to Example 1, and the variation in the content of tVOCs in the final product for a month also significantly increased.

Comparative Example 2

In Comparative Example 2, a polymer was prepared by the same process flow as that of Example 1, except that the second steam stream was not fed and the flow rate of the third steam stream was 12 ton/hr.

As a result, in Comparative Example 2, a total of 12 ton/hr of steam was used, the content of tVOCs in the final product was 10 ppm based on a total of 1 part by weight of the final product, and the variation in the content of tVOCs in the final product for a month was approximately 1% based on 10 ppm.

In Comparative Example 2 in which a second steam stream was not provided unlike Example 1, it was difficult to control the operating temperature of the first stripper, and it was confirmed that the variation in the content of tVOCs in the final product for a month increased compared to Example 1.

Comparative Example 3

A polymer preparation process was performed according to a process flow illustrated in FIG. 3.

In Comparative Example 3, a polymer was prepared by the same process flow as that of Example 2, except that the second steam stream was not mixed with the ejector discharge stream, and the second steam stream was directly fed to the second stripper through a line connected to the second stripper.

As a result, in Comparative Example 3, a total of 12 ton/hr of steam was used, the content of tVOCs in the final product was 37 ppm based on a total of 1 part by weight of the final product, and the variation in the content of tVOCs in the final product for a month was approximately 2.6% based on 37 ppm.

In Comparative Example 3 in which the second steam stream was directly fed to the second stripper without being mixed with the ejector discharge stream, an imbalance (maldistribution) of material transfer and heat transfer occurred in the second stripper 200, and as a result, it was difficult to control the operating temperature of the first stripper, and the quality deterioration and unevenness of the final product were caused.

Comparative Example 4

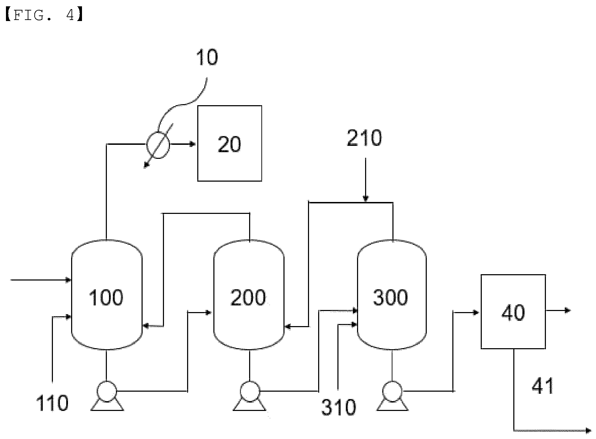

A polymer preparation process was performed according to a process flow illustrated in FIG. 4.

In Comparative Example 4, a polymer was prepared by the same process flow as that of Example 2, except that an ejector was not provided above the third stripper 300, the third steam stream 310 was fed to the third stripper 300 rather than the ejector, a mixture of the second stripper upper discharge stream and the second steam stream 210 was fed to the second stripper 200, the flow rate of the first steam stream 110 was 1 ton/hr, the flow rate of the second steam stream 210 was 7 ton/hr, and the flow rate of the third steam stream 310 was 8 ton/hr.

As a result, in Comparative Example 4, in order to maintain the operating temperature of the first stripper 100 at 85°C, 4 ton/hr of steam was additionally required compared to Example 3. In addition, due to the absence of an ejector above the third stripper 300, the overpressure of the third stripper 300 was not be relieved, and since the pipe for moving the third stripper upper discharge stream was connected to the upper portion of the third stripper 300 and the lower portion of the second stripper 200, the pressure of the third stripper was naturally 1.8 bar. Due to this, the problem that the operating temperature of the third stripper increased to 117°C occurred. Therefore, the third stripper lower discharge stream was introduced into the dehydration process 40 at a high temperature and a high pressure, and residual heat was generated due to the difference in temperature. However, since the dehydration process 40 was performed in an open system, it was difficult to recover the superheated steam generated by the residual heat, resulting in heat loss in the dehydration process 40. In addition, a white plume phenomenon in which the superheated steam was condensed due to the cold outside air occurred, causing a white haze that obscured the view, and thus, it was impossible to work in the dehydration process 40.

[Detailed Description of Main Elements]

10: Condenser
20: Purification process
100: First stripper
200: Second stripper
300: Third stripper
110: First steam stream
120: Second steam stream
130: Third steam stream
30: Ejector
40: Dehydration process
41: Circulation stream

**Claims**

1. A method for preparing a polymer, the method comprising:

feeding a feed stream containing water and a polymer solution to a first stripper to obtain a first stripper upper discharge stream containing a solvent and a first stripper lower discharge stream containing the polymer and water;
feeding the first stripper lower discharge stream to a second stripper to obtain a second stripper upper discharge stream and a second stripper lower discharge stream, feeding the second stripper upper discharge stream to the first stripper, and feeding the second stripper lower discharge stream to a third stripper;
separating the second stripper lower discharge stream into a third stripper upper discharge stream and a third stripper lower discharge stream in the third stripper;
feeding a third steam stream containing steam to an ejector, sucking the third stripper upper discharge stream by the ejector to obtain an ejector discharge stream containing the third steam stream and the third stripper upper discharge stream, and feeding a mixed stream obtained by mixing the ejector discharge stream with a second steam stream containing steam to the second stripper; and
obtaining the polymer from the third stripper lower discharge stream.

2. The method of claim 1, wherein the second stripper upper discharge stream and the third stripper upper discharge stream contain the solvent, and the second stripper lower discharge stream and the third stripper lower discharge stream contain the polymer and water.

3. The method of claim 1, wherein a first steam stream containing steam is fed to the first stripper through a line connected to the first stripper.

4. The method of claim 3, wherein a mass flow rate of a second steam stream is 0.15 to 0.40 with respect to the total mass flow rate of the first steam stream, the second steam stream, and the third steam stream.

5. The method of claim 1, wherein an operating temperature of the first stripper is higher than a glass transition temperature (Tg) of the polymer by 5°C or more, and is higher than an azeotropic point of the solvent and water by 10°C or more.

6. The method of claim 5, wherein the operating temperature of the first stripper is 85 to 95°C.

7. The method of claim 1, wherein the following Expressions 1 and 2 are satisfied:

$$[\text{Expression 1}]$$

$$P2 - P1 \geq 0.2 \text{ bar}$$

$$[\text{Expression 2}]$$

$$1.8 \text{ bar} \geq P1 \geq 1.1 \text{ bar}$$

wherein P1 is an operating pressure of the first stripper and P2 is an operating pressure of the second stripper.

8. The method of claim 1, wherein the obtaining of the polymer from the third stripper lower discharge stream includes feeding the third stripper lower discharge stream to a dehydration process and dehydrating the third stripper lower discharge stream to obtain the polymer.

9. The method of claim 8, wherein the water contained in the feed stream is derived from the water separated from the polymer by dehydrating the third stripper lower discharge stream in the dehydration process, and a mass flow rate of the water contained in the feed stream is 11 to 15 times a mass flow rate of the polymer contained in the feed stream.

10. The method of claim 1, wherein the polymer solution is derived from a reaction product produced by feeding a monomer stream and a solvent stream to a reactor and performing a polymerization reaction, and wherein the polymer solution contains the polymer and the solvent.

11. The method of claim 1, wherein the solvent includes one or more selected from the group consisting of cyclohexane, N,N-dimethylformamide, N,N-dimethylacetamide, N-methyl-2-pyrrolidone, N-cyclohexyl-2-pyrrolidone, 1,3-dialkyl-2-imidazolidinone, tetramethyl urea, and hexamethylphosphoric acid triamide.

12. The method of claim 1, wherein the polymer includes a styrene-butadiene copolymer.

13. The method of claim 1, wherein no steam is introduced into the third stripper, and a temperature of the steam is 120 to 280°C and a pressure of the steam is 2 to 100 bar, respectively.

【FIG. 1】

【FIG. 2】

【FIG. 3】

【FIG. 4】

## INTERNATIONAL SEARCH REPORT

| | International application No. |
|---|---|
| | **PCT/KR2024/010688** |

| A. | CLASSIFICATION OF SUBJECT MATTER |
|---|---|

**C08F 2/06**(2006.01)i; **C08F 2/01**(2006.01)i; **C08F 236/10**(2006.01)i; **C08F 212/08**(2006.01)i

According to International Patent Classification (IPC) or to both national classification and IPC

| B. | FIELDS SEARCHED |
|---|---|

Minimum documentation searched (classification system followed by classification symbols)

C08F 2/06(2006.01); C07C 15/46(2006.01); C07C 263/10(2006.01); C07C 263/18(2006.01); C07C 7/08(2006.01); C08C 2/02(2006.01); C08C 2/06(2006.01); C08F 10/08(2006.01); C08F 297/04(2006.01); C08F 6/00(2006.01); C08F 6/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스트리퍼(stripper), 스팀(steam), 이젝터(ejector), 용매(solvent), 분리(separation), 회수(recovery)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 102382214 B (CHINA PETROLEUM & CHEMICAL) 03 April 2013 (2013-04-03)<br>See abstract; claims 1-13; paragraphs [0010]-[0027]; and figure 4. | 1-13 |
| A | CN 202359051 U (MAOMING LUHUA CHEMICAL INDUSTRIAL CO., LTD.) 01 August 2012 (2012-08-01)<br>See claims 1-4; and figure 1. | 1-13 |
| A | KR 10-2022-0019991 A (LG CHEM, LTD.) 18 February 2022 (2022-02-18)<br>See claims 1-13. | 1-13 |
| A | KR 10-2020-0108054 A (CHINA PETROLEUM AND CHEMICAL CORPORATION et al.) 16 September 2020 (2020-09-16)<br>See claims 1-23. | 1-13 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 November 2024** | **04 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## EP 4 603 514 A1

**INTERNATIONAL SEARCH REPORT**

### C. DOCUMENTS CONSIDERED TO BE RELEVANT

| Category* | Citation of document, with indication, where appropriate, of the relevant passages | Relevant to claim No. |
|---|---|---|
| A | KR 10-2015-0074132 A (BASF SE) 01 July 2015 (2015-07-01)<br>See claims 1-7. | 1-13 |

## INTERNATIONAL SEARCH REPORT
### Information on patent family members

International application No.

**PCT/KR2024/010688**

| Patent document cited in search report | | | Publication date (day/month/year) | Patent family member(s) | | | Publication date (day/month/year) |
|---|---|---|---|---|---|---|---|
| CN | 102382214 | B | 03 April 2013 | CN | 102382214 | A | 21 March 2012 |
| CN | 202359051 | U | 01 August 2012 | CN | 102434833 | A | 02 May 2012 |
| | | | | CN | 102434833 | B | 25 March 2015 |
| | | | | CN | 200426836 | Y | 18 April 2001 |
| KR | 10-2022-0019991 | A | 18 February 2022 | | None | | |
| KR | 10-2020-0108054 | A | 16 September 2020 | CN | 110028376 | A | 19 July 2019 |
| | | | | CN | 110028376 | B | 06 August 2021 |
| | | | | KR | 10-2672412 | B1 | 04 June 2024 |
| | | | | RU | 2020124903 | A | 14 February 2022 |
| | | | | RU | 2020124903 | A3 | 21 April 2022 |
| | | | | SA | 520412404 | B1 | 09 July 2023 |
| | | | | TW | 201936553 | A | 16 September 2019 |
| | | | | TW | I794391 | B | 01 March 2023 |
| | | | | US | 11465953 | B2 | 11 October 2022 |
| | | | | US | 2020-0354292 | A1 | 12 November 2020 |
| | | | | WO | 2019-137383 | A1 | 18 July 2019 |
| KR | 10-2015-0074132 | A | 01 July 2015 | BR | 112015008481 | A2 | 04 July 2017 |
| | | | | CN | 104755458 | A | 01 July 2015 |
| | | | | CN | 104755458 | B | 20 June 2017 |
| | | | | EP | 2912010 | A1 | 02 September 2015 |
| | | | | EP | 2912010 | B1 | 14 December 2016 |
| | | | | EP | 2912010 | B2 | 25 December 2019 |
| | | | | HU | E033422 | T2 | 28 November 2017 |
| | | | | JP | 2015-532310 | A | 09 November 2015 |
| | | | | JP | 6149115 | B2 | 14 June 2017 |
| | | | | KR | 10-2209958 | B1 | 01 February 2021 |
| | | | | WO | 2014-064128 | A1 | 01 May 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240000796